# EUROPÄISCHE PATENTSCHRIFT

(11) **EP 1 925 423 B1**
(45) Veröffentlichungstag und Bekanntmachung des Hinweises auf die Patenterteilung: **04.11.2009**
(21) Anmeldenummer: 06024254.2
(22) Anmeldetag: 23.11.2006
(51) Int. Cl.: B29C 47/50, F16M 7/00

(54) **Anlage zum Aufbereiten von Stoffen**
Apparatus for processing materials
Dispositif de traitement des matières

(43) Veröffentlichungstag der Anmeldung: 28.05.2008
(73) Patentinhaber: Coperion GmbH, 70469 Stuttgart (DE)
(72) Erfinder: Davids, Ralf, Dipl.-Ing., 75428 Illingen (DE); Koberg, Carsten, Dipl.-Ing., 70825 Korntal (DE); Schleicher, Raimund, Dipl.-Ing., 71672 Marbach (DE); Riehle, Ralf, Dipl.-Ing., 72144 Dußlingen (DE)
(74) Vertreter: Rau, Manfred

(56) Entgegenhaltungen:
- EP-A1- 0 849 065
- DE-A1- 19 544 165
- GB-A- 1 315 661
- GB-A- 1 536 542
- US-A1- 2006 076 705

## Beschreibung

Die Erfindung betrifft eine Anlage zum Aufbereiten von Stoffen nach dem Oberbegriff des Anspruches 1.

Insbesondere bei der Aufbereitung von Kunststoffen ist es oft sinnvoll, zwei hintereinander angeordnete Extruder vorzusehen, die jeweils nur einzelne Verfahrensschritte der Aufbereitung durchführen. Beispielsweise kann beim Einsatz von Kunststoff in Pulverform das Einziehen des Pulvers und das Aufschmelzen in einem ersten Extruder erfolgen. Die Homogenisierung und der Druckaufbau erfolgt dann in einem zweiten nachgeordneten Extruder. Derartige Hintereinander-Anordnungen von mehreren Extrudern sind beispielsweise aus der EP 1 005 411 B1, der US 3,261,056 A, der DE 2 304 088 A und der EP 1 626 854 A bekannt. Bei den aus dem Schrifttum und der Praxis bekannten Anlagen der gattungsgemäßen Art treten Probleme dadurch auf, dass beim Aufheizen während des Anfahrens große temperaturbedingte Ausdehnungen erfolgen, die zu erheblichen Verspannungen im Gesamtsystem führen können.

Aus der GB 1 315 661 A ist eine Anlage nach dem Oberbegriff des Anspruches 1 bekannt, bei der der Rohrkrümmer selber aufgrund seiner Flexibilität dazu dient, Längenänderungen der ersten Schneckenmaschine und temperaturbedingte Höhenänderungen der zweiten Schneckenmaschine durch entsprechende Verformung zu kompensieren.

Aus der DE 195 44 165 A1 sind Gehäuseauflagerungen von thermischen Maschinen mit Gleitelementen zur Gewährleistung reibungsarmer und damit störungsfreier Dehnvorgänge bekannt. Insbesondere angesprochen sind hier die Kompensation von Wärmedehnungen von Turbinen- und Lagergehäusen.

Aus der EP 0 849 065 A1 ist ein Kompensator zum Ausgleich von durch Temperatureinflüsse hervorgerufenen Längenänderungen bekannt, der ein Gehäuse und einen hierin verschiebbar angeordneten Schiebekolben aufweist. Der Schiebekolben enthält einen Kanal, der über einen Kniebogen in einen weiteren senkrecht hierzu angeordneten Durchflusskanal übergeht. Der Schiebekolben wird mit einer ersten Austrags-Zone einer ersten Schneckenmaschine verbunden, während das Gehäuse mit dem Durchflusskanal mit dem Zuführ-Bereich einer zweiten Schneckenmaschine verbunden wird. Bei thermisch bedingten Längenänderungen der ersten Schneckenmaschine verschiebt sich der Schiebekolben relativ zum Gehäuse und damit auch relativ zum Durchflusskanal, wobei aber die Verbindung zwischen den Kanälen erhalten bleibt.

Aus der GB 1 536 542 A ist es bekannt, zwei Schneckenmaschinen rechtwinklig zueinander direkt übereinander anzuordnen. Der Antriebsteil der ersten Schneckenmaschine ist zusammen mit der Schnecke auf einem verfahrbaren Wagen angeordnet, so dass durch Verfahren des Wagens die Schnecke aus dem Gehäuse der ersten Schneckenmaschine gezogen werden kann. Um Fluchtungsfehler zwischen der Schnecke und dem Gehäuse der ersten Schneckenmaschine aufgrund thermisch bedingter Änderungen zu unterdrücken, ist der Wagen mit Schwingungs-Dämpfungs-Lagern versehen.

Aus der US 2006/0076705 A1 ist es bekannt, zwei Schneckenmaschinen hintereinander in einer gemeinsamen horizontalen Ebene anzuordnen. Die erste Schneckenmaschine mündet direkt seitlich in die zweite Schneckenmaschine ein. Zum Ausgleich thermischer Längenänderungen des Gehäuses der ersten Schneckenmaschine ist deren Gehäuse an seinem der zweiten Schneckenmaschine zugewandten Austrags-Ende direkt verschiebbar in einem entsprechenden Muffen-Gehäuse des Gehäuses der zweiten Schneckenmaschine abgedichtet geführt.

Der Erfindung liegt daher die Aufgabe zugrunde, eine Anlage der gattungsgemäßen Art so auszugestalten, dass die temperaturbedingten Längenänderungen und Höhenänderungen der Extruder nicht zu einer Schädigung der Anlage führen.

Diese Aufgabe wird erfindungsgemäß durch die Merkmale im Kennzeichnungsteil des Anspruches 1 gelöst. Nach der Erfindung ist also vorgesehen, einerseits zwischen dem ersten Extruder und dem Rohr-Krümmer eine Längenänderungs-Kompensations-Einrichtung und zwischen der der Austrags-Zone des ersten Extruders benachbarten Stütze und dessen Gehäuse eine Höhenänderungs-Kompensations-Einrichtung vorzusehen. Die Höhenänderung des zweiten Extruders wird also zwischen dem Gehäuse des ersten Extruders und der erwähnten Stütze kompensiert.

Entsprechend der Ausgestaltung nach Anspruch 2 wird die temperaturbedingte Höhenänderung des zweiten Gehäuses des zweiten Extruders in einer vorgegebenen, rechnerisch oder durch Versuche ermittelten festen Beziehung zur Längenänderung des ersten Gehäuses des ersten Extruders kompensiert.

Die Ansprüche 3 und 4 geben hierfür vorteilhafte Ausgestaltungen wieder.

Anspruch 5 gibt eine vorteilhafte Ausgestaltung für die Längenänderungs-Kompensations-Einrichtung wieder.

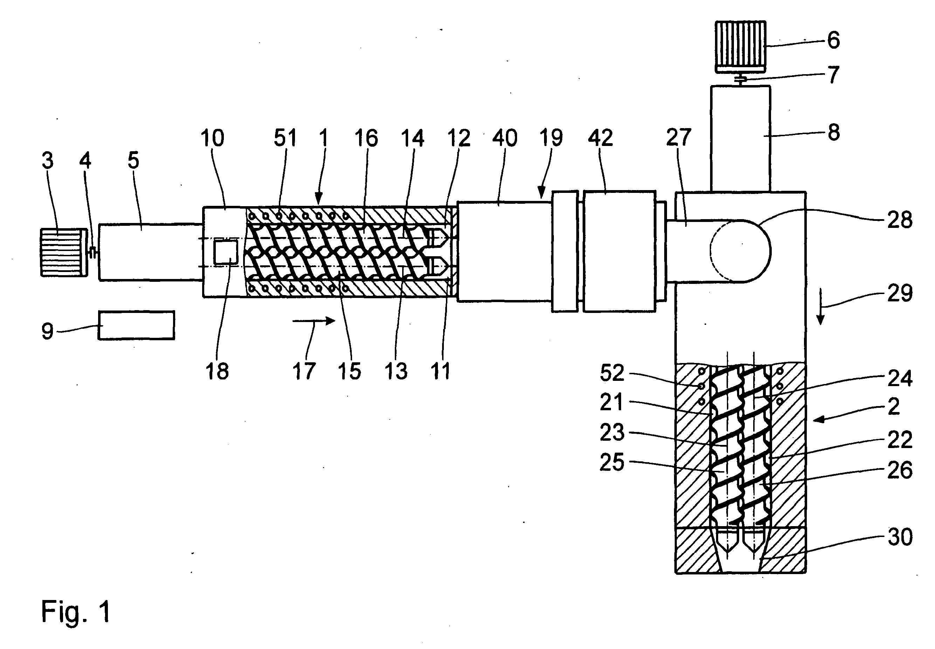

Weitere Vorteile, Merkmale und Einzelheiten der Erfindung ergeben sich aus der nachfolgenden Beschreibung eines Ausführungsbeispiels anhand der Zeichnung. Es zeigt
- Fig. 1: eine Draufsicht auf eine erfindungsgemäße Anlage in schematischer, teilweise aufgebrochener Darstellung,
- Fig. 2: eine Teil-Seitendarstellung der Anlage nach Fig. 1 in teilweise aufgebrochener und gegenüber Fig. 1 detaillierter Darstellung und

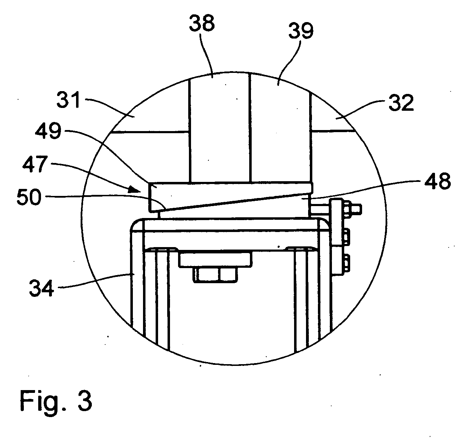

- Fig. 3: eine vergrößerte Teil-Darstellung der Höhenänderungs-Kompensations-Einrichtung aus Fig. 2.

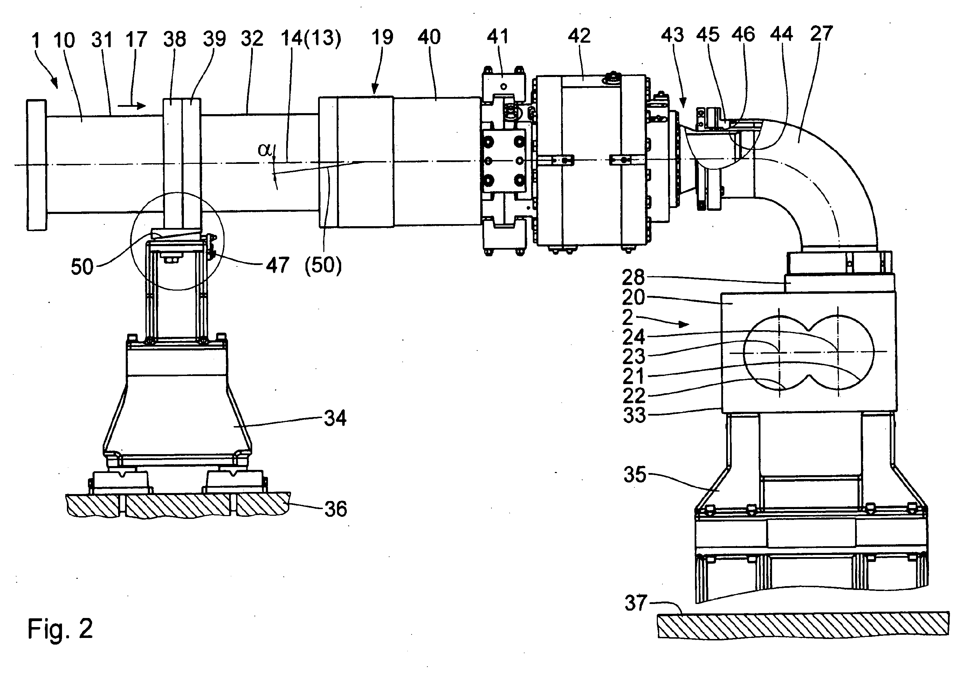

Die in der Zeichnung dargestellte Extruder-Kaskade weist einen ersten Extruder 1 und einen zweiten Extruder 2, also Schneckenmaschinen, auf. Der erste Extruder 1 ist oberhalb des zweiten Extruders 2 angeordnet (siehe Fig. 2). Der erste Extruder 1 wird mittels eines ersten Motors 3 über eine erste Kupplung 4 und über ein erstes Getriebe 5 angetrieben. Der zweite Extruder 2 wird mittels eines zweiten Motors 6 über eine zweite Kupplung 7 und ein zweites Getriebe 8 angetrieben. Die Steuerung der Motoren 3 und 6 erfolgt über eine Steuereinheit 9. Die Extruder 1, 2 sind jeweils an ihrem Getriebe 5, 8 in ihrer Längsrichtung unverschiebbar befestigt.

Der erste Extruder 1 weist ein Gehäuse 10 auf, in dem zwei erste Gehäuse-Bohrungen 11, 12 mit zueinander parallelen Achsen 13, 14 ausgebildet sind, die parallel zueinander verlaufen und etwa 8-förmig ineinander greifen. In diesen Gehäuse-Bohrungen 11, 12 sind zwei erste Schnecken-Wellen 15, 16 angeordnet, die an das erste Getriebe 5 angekuppelt sind. Die Schnecken-Wellen 15, 16 werden gleich- oder gegensinnig angetrieben. Der erste Extruder 1 weist einen in einer ersten Förderrichtung 17 hinter dem ersten Getriebe 5 angeordneten ersten Zuführ-Bereich 18 für zu behandelnde Stoffe auf, an den sich in der ersten Förderrichtung 17 ein oder mehrere Behandlungszonen anschließen.

Am Ende des ersten Extruders 1 ist eine erste Austrags-Zone 19 vorgesehen, aus der der Austrag in der ersten Förderrichtung 17 erfolgt. Anstelle von zwei Gehäuse-Bohrungen 11, 12 und entsprechend zwei Schnecken-Wellen 15, 16 können auch nur eine Bohrung oder drei oder mehr Bohrungen und eine entsprechende Zahl von Schnecken-Wellen vorhanden sein.

Der zweite Extruder 2 weist ebenfalls ein Gehäuse 20 auf, in dem zwei zweite Gehäuse-Bohrungen 21, 22 mit zueinander parallelen Achsen 23, 24 und einander durchdringend ausgebildet sind, die also ebenfalls einen 8-förmigen Querschnitt begrenzen. In den zweiten Gehäuse-Bohrungen 21, 22 sind zwei mit dem zweiten Getriebe 8 gekuppelte zweite Schnecken-Wellen 25, 26 angeordnet, die ebenfalls gleich- oder gegensinnig drehantreibbar sind.

Der erste Extruder 1 ist mittels eines sich an seine Austrags-Zone 19 anschließenden Rohr-Krümmers 27 mit dem zweiten Extruder 2 verbunden, wobei der Rohr-Krümmer 27 in einem zweiten Zuführ-Bereich 28 in den zweiten Extruder 2 einmündet. Der Rohr-Krümmer 27 ist fest mit der Oberseite des zweiten Gehäuses 20 verbunden. An den Zuführ-Bereich 28 schließen sich wiederum ein oder mehrere Behandlungs-Zonen an. An dem in einer zweiten Förderrichtung 29 stromabwärts gelegenen, dem zweiten Zuführ-Bereich 28 abgewandten Ende des zweiten Extruders 2 weist dieser eine zweite Austrags-Zone 30 auf.

Auch für den zweiten Extruder 2 gilt, dass nur eine oder mehr als zwei Gehäuse-Bohrungen und eine entsprechende Zahl von Schnecken-Wellen vorhanden sein können.

Wie aus Fig. 2 hervorgeht, ist das erste Gehäuse 10 in üblicher Weise aus einzelnen Gehäuse-Schüssen aufgebaut, von denen nur die beiden letzten Gehäuse-Schüsse 31, 32 dargestellt sind. Für das zweite Gehäuse 20 gilt entsprechendes, wobei nur ein Gehäuse-Schuss 33 dargestellt ist. Sowohl das erste Gehäuse 10 als auch das zweite Gehäuse 20 sind über Stützen 34, 35 auf Fundamenten 36, 37 abgestützt, wovon für jedes Gehäuse 10, 20 eine Stütze 34 bzw. 35 in Fig. 2 angedeutet ist. Die im Rahmen der Erfindung wesentliche Stütze 34 ist unterhalb der Verbindungs-Flansche 38, 39 angeordnet, mit denen die beiden letzten Gehäuse-Schüsse 31, 32 des ersten Gehäuses 10 miteinander verbunden sind. Diese Stütze 34 ist also die dem Rohr-Krümmer 27 nächst benachbarte Stütze des ersten Extruders 1; sie befindet sich also - bezogen auf die erste Förderrichtung 17 - unmittelbar vor der ersten Austrags-Zone 19 des ersten Extruders 1. An den - bezogen auf die erste Förderrichtung 17 - letzten Gehäuse-Schuss 32 schließt sich eine Anfahr-Drossel 40 an, mit der über einen Flansch 41 noch ein Filter-Gehäuse 42 mit einem Filter verbunden ist. An den Filter 42 schließt sich dann der bereits erwähnte Rohr-Krümmer 27 an, der sich über einen Viertelkreis erstreckt, also aus der horizontalen Richtung der Achsen 13, 14 um 90° umgelenkt ist. In der Regel verlaufen alle Achsen 13, 14 und 23, 24 horizontal, so dass also eine Umlenkung aus der horizontalen Richtung der Achsen 13, 14 senkrecht nach unten auf den entsprechend tiefer angeordneten zweiten Extruder 2 erfolgt, dessen zweiter Zuführ-Bereich 28 an seiner Oberseite liegt.

Zwischen dem Filter-Gehäuse 42 und dem Rohr-Krümmer 27 ist noch eine Längenänderungs-Kompensations-Einrichtung 43 für temperaturbedingte Längenänderungen des ersten Extruders 1 vorgesehen. Diese Längenänderungen erfolgen vom Getriebe 5 her. Die Einrichtung 43 besteht im Prinzip aus einer Schiebe-Hülsen-Verbindung, wobei eine am Filter-Gehäuse 42 angebrachte rohrförmige Schiebe-Hülse 44 in einen geraden Rohr-Abschnitt 45 des Rohr-Krümmers 27 eingreift, wobei zwischen beiden eine Dichtung 46 vorgesehen ist. Das erste Gehäuse 10 kann sich also in Richtung der ersten Achsen 13, 14 in seiner Länge verändern, ohne dass der Rohr-Krümmer 27 in Richtung der ersten Achsen 13, 14 verschoben wird. Diese Längenänderungen des ersten Gehäuses 10 samt Anfahr-Drossel 40 und Filter-Gehäuse 42 wirken sich nur in relativen Verschiebungen der Schiebe-Hülse 44 zum Rohr-Abschnitt 45 aus, ohne dass der Rohr-Krümmer 27 selber verschoben wird.

Bei der Erwärmung der Extruder 1, 2 dehnt sich das zweite Gehäuse 20 des zweiten Extruders 2 auch quer zur Richtung der Achsen 23, 24 aus, und zwar nach oben, da die Höhenlage des zweiten Fundaments 37 und der Stütze 35 unveränderbar ist. Durch diese Ausdehnung nach oben wird der Rohr-Krümmer 27 quer zur Richtung der Achsen 13, 14 nach oben verschoben. Zum Ausgleich dieser temperaturbedingten Ausdehnung ist eine Höhenänderungs-Kompensations-Einrichtung 47 vorgesehen, die zwischen der Stütze 34 des ersten Extruders 1 und dem ersten Gehäuse 10 angeordnet ist. Sie besteht im Wesentlichen aus zwei flachen Keilen, von denen ein erster unterer Keil 48 auf der Stütze 34 angebracht ist, während der zweite obere Keil 49 am ersten Gehäuse 10, und zwar konkret an den Verbindungs-Flanschen 38, 39 der Gehäuse-Schüsse 31, 32 anliegt und mit diesen verbunden ist. Die beiden Keile 48, 49 liegen in einer Gleitfläche 50 aneinander an, die in der ersten Förderrichtung 17 gesehen in Richtung zum Rohr-Krümmer 27 bzw. zur ersten Austrags-Zone 19 hin ansteigt. In der ersten Förderrichtung 17 gesehen steigt die Gleitfläche 50 also zu der durch die Achsen 13, 14 aufgespannten Ebene hin an.

Wenn der erste Extruder 1 und der zweite Extruder 2 beim Anfahren beispielsweise mittels der Heizungen 51, 52 aufgeheizt werden, dann dehnt sich der erste Extruder 1 in seiner Längsrichtung zu seiner Austrags-Zone 19 hin aus. Hierbei gleitet der mit dem ersten Gehäuse 10 verbundene zweite obere Keil 49 über den in Richtung der Achsen 13, 14 unverschiebbaren unteren Keil 48, wodurch das erste Gehäuse 10 in diesem Bereich und entsprechend naturgemäß auch im Bereich des Übergangs auf den Rohr-Krümmer 27 angehoben wird. Der Neigungs-Winkel α der Gleitfläche 50 gegenüber den ersten Achsen 13, 14 ist so gewählt, dass die im normalen Betrieb auftretende temperaturbedingte Längenänderung in eine entsprechend kleinere temperaturbedingte Höhenausdehnung des zweiten Extruders 2 kompensiert. Bei großen Maschinen liegt die im Betrieb auftretende Längenausdehnung des ersten Extruders 1 im Bereich von 15 mm, während die Höhenausdehnung des zweiten Extruders 2 im Bereich von 3 mm liegen kann. Der Winkel α wird in dem Fall so gewählt, dass gilt: tg α ≈ 0,2. Für alle praktisch vorkommenden Fälle gilt etwa 0,15 ≤ tg α ≤ 0,25.

## Patentansprüche

1. Anlage zum Aufbereiten von Stoffen,
- mit einer ersten Schneckenmaschine, die
-- ein erstes Gehäuse (10),
-- mindestens eine erste Gehäuse-Bohrung (11, 12) mit einer ersten Achse (13, 14),
-- eine in der mindestens einen ersten Gehäuse-Bohrung (11, 12) angeordnete erste Schnecken-Welle (15, 16),
-- einem an einem ersten Ende des ersten Gehäuses (10) in die erste Gehäuse-Bohrung (11, 12) mündenden ersten Zuführ-Bereich für aufzubereitende Stoffe,
-- eine an einem zweiten Ende des ersten Gehäuses (10) angeordnete erste Austrags-Zone (19) und
-- eine das erste Gehäuse (10) im Bereich der ersten Austrags-Zone (19) tragende Stütze (34)
aufweist,
- mit einer zweiten Schneckenmaschine, die
-- ein unterhalb des ersten Gehäuses (10) angeordnetes zweites Gehäuse (20),
-- mindestens eine zweite Gehäuse-Bohrung (21, 22) mit einer zweiten Achse (23, 24),
-- eine in der zweiten Gehäuse-Bohrung (21, 22) angeordnete zweite Schnecken-Welle (25, 26),
-- einen an einem ersten Ende des zweiten Gehäuses (20) in die zweite Gehäuse-Bohrung (21, 22) mündenden zweiten Zuführ-Bereich (28) und
-- eine an einem zweiten Ende des zweiten Gehäuses (20) angeordnete zweite Austrags-Zone (30), aufweist,
- mit einem Rohr-Krümmer (27), der
-- mit der ersten Austrags-Zone (19) der ersten Schneckenmaschine und
-- mit dem zweiten Zuführ-Bereich (28) des zweiten Gehäuses (20) verbunden ist,
**dadurch gekennzeichnet,**
**dass** der Rohr-Krümmer (27) mit der ersten Schneckenmaschine mittels einer Längenänderungs-Kompensations-Einrichtung (43) verbunden ist und
**dass** zwischen der Stütze (34) und dem ersten Gehäuse (10) eine Höhenänderungs-Kompensations-Einrichtung (47) vorgesehen ist.

2. Anlage nach Anspruch 1, **dadurch gekennzeichnet,**
**dass** die Höhenänderungs-Kompensations-Einrichtung (47) als Schiebelager mit einer in der ersten Förderrichtung (17) zu der Achse (13, 14) hin ansteigenden Gleitfläche (50) ausgebildet ist.

3. Anlage nach Anspruch 2, **dadurch gekennzeichnet,**
**dass** die Gleitfläche (50) zwischen zwei Keilen (48, 49) ausgebildet ist, von denen ein unterer Keil (48) mit der Stütze (34) und ein oberer Keil (49) mit dem ersten Gehäuse (10) verbunden ist.

4. Anlage nach Anspruch 2, **dadurch gekennzeichnet,**
**dass** die Gleitfläche (50) mit der ersten Achse (13, 14) einen Winkel (α)einschließt, wobei gilt 0,15 ≤ tg α ≤ 0,25 und insbesondere tg α ≈ 0,2.

5. Anlage nach einem der Ansprüche 1 bis 4, **dadurch gekennzeichnet, dass** die Längenänderungs-Kompensations-Einrichtung (43) als Schiebe-Hülse (44) ausgebildet ist.

## Claims

1. A material processing plant, comprising
- a first screw-type machine provided with
-- a first casing (10),
-- at least one first casing bore (11, 12) provided with a first axis (13, 14),
-- a first screw shaft (15, 16) disposed in the at least one first casing bore (11, 12),
-- a first feeding area for material to be processed, said first feeding area projecting into the first casing bore (11, 12) at a first end of the first casing (10),
-- a first discharge area (19) disposed at a second end of the first casing (10), and
-- a column (34) supporting the first casing (10) in the area of the first discharge zone (19),
- a second screw-type machine provided with
-- a second casing (20) disposed below the first casing (10),
-- at least one second casing bore (21, 22) provided with a second axis (23, 24),
-- a second screw shaft (25, 26) disposed in the second casing bore (21,22),
-- a second feeding area (28) projecting into the second casing bore (21, 22) at a first end of the second casing (20), and
-- a second discharge area (30) disposed at a second end of the second casing (20),
- a pipe elbow (27) which is connected
-- to the first discharge area (19) of the first screw-type machine, and
-- to the second feeding area (28) of the second casing (20),
**characterized**
**in that** the pipe elbow (27) is connected to the first screw-type machine by means of an elongation compensation device (43), and in that a height compensation device (47) is provided between the column (34) and the first casing (10).

2. A plant of claim 1, **characterized**
**in that** the height compensation device (47) is configured as a slide bearing provided with a sliding surface (50) which slopes up towards the axis (13, 14) in the first direction of flow (17).

3. A plant of claim 2, **characterized**
**in that** the sliding surface (50) is formed between two wedges (48, 49) of which a lower wedge (48) is connected to the column (34) and an upper wedge (49) is connected to the first casing (10).

4. A plant of claim 2, **characterized**
**in that** the sliding surface (50) forms an angle (α) with the first axis (13, 14), whereby 0.15 ≤ tg α ≤ 0.25, and in particular tg α ≈ 0.2.

5. A plant of any one of claims 1 to 4, **characterized**
**in that** the elongation compensation device (43) is configured as a sliding sleeve (44).

## Revendications

1. Dispositif pour le traitement de matières,
- comportant une première extrudeuse, qui comporte
-- un premier carter (10),
-- au moins un premier alésage (11, 12) avec un premier axe (13, 14) dans ledit carter,
-- un premier arbre à vis sans fin (15, 16) monté dans ledit au moins un premier alésage (11, 12) du carter,
-- une première zone d'admission des matières à traiter, débouchant dans le premier alésage (11, 12) du carter au niveau d'une première extrémité du premier carter (10),
-- une première zone de sortie (19), disposée au niveau d'une deuxième extrémité du premier carter (10), et
-- un support (34) portant le premier carter (10) dans la zone de la première zone de sortie (19),
- comportant une deuxième extrudeuse, qui comporte
-- un deuxième carter (20), disposé en dessous du premier carter (10),
-- au moins un deuxième alésage (21, 22) avec un deuxième axe (23, 24) dans ledit carter,
-- un deuxième arbre à vis sans fin (25, 26) monté dans ledit au moins un deuxième alésage (21, 22) du carter,
-- une deuxième zone d'admission (28) débouchant dans le deuxième alésage (21, 22) du carter au niveau d'une première extrémité du deuxième carter (20), et
-- une deuxième zone de sortie (30), disposée au niveau d'une deuxième extrémité du deuxième carter (20),
- comportant un coude tubulaire (27), qui est relié
-- à la première zone de sortie (19) de la première extrudeuse et
-- à la deuxième zone d'admission (28) du deuxième carter (20) ,
**caractérisé**
**en ce que** le coude tubulaire (27) est relié à la première extrudeuse au moyen d'un dispositif de compensation de la variation de longueur (43), et
**en ce que**, entre le support (34) et le premier carter (10), il est prévu un dispositif de compensation de la variation de hauteur (47).

2. Dispositif selon la revendication 1, **caractérisé en ce que** le dispositif de compensation de la variation de hauteur (47) est réalisé sous la forme d'un palier coulissant avec une première surface de glissement (50) en pente ascendante vers l'axe (13, 14) dans la première direction de transport (17).

3. Dispositif selon la revendication 2, **caractérisé en ce que** la surface de glissement (50) est réalisée entre deux cales (48, 49), parmi lesquelles une cale inférieure (48) est reliée au support (34) et une cale supérieure (49) est reliée au premier carter (10).

4. Dispositif selon la revendication 2, **caractérisé en ce que** la surface de glissement (50) forme avec le premier axe (13, 14) un angle (α), sachant que 0,5 ≤ tg α ≤ 0,25.

5. Dispositif selon l'une quelconque des revendications 1 à 4, **caractérisé en ce que** le dispositif de compensation de la variation de longueur (43) est réalisé sous forme de manchon coulissant (44).
